# EUROPEAN PATENT SPECIFICATION

(11) **EP 4 531 183 B1**
(45) Date of publication and mention of the grant of the patent: **02.09.2026**
(21) Application number: 23912711.1
(22) Date of filing: 18.12.2023
(51) Int. Cl.: H01M 50/258, H01M 50/264, H01M 50/249, H01M 50/289

(54) **BATTERY MODULE AND BATTERY PACK INCLUDING THE SAME**
BATTERIEMODUL UND BATTERIEPACK DAMIT
MODULE DE BATTERIE ET BLOC-BATTERIE LE COMPRENANT

(30) Priority: 26.12.2022 KR 20220184467; 15.12.2023 KR 20230183617
(43) Date of publication of application: 02.04.2025
(73) Proprietor: LG Energy Solution, Ltd., Seoul 07335 (KR)
(72) Inventor: LEE, Jung Hoon, Daejeon 34122 (KR); UM, Taeki, Daejeon 34122 (KR); RYU, Jaeuk, Daejeon 34122 (KR); KIM, Hyun Jung, Daejeon 34122 (KR)
(74) Representative: Plasseraud IP
(86) International application number: PCT/KR2023/020854
(87) International publication number: WO 2024/144036

(56) References cited:
- EP-A1- 3 978 284
- WO-A1-2021/253976
- KR-A- 20080 025 429
- KR-A- 20180 080 685
- KR-A- 20200 064 761
- KR-A- 20220 026 813
- US-A1- 2020 287 179

## Description

### [TECHNICAL FIELD]

### Cross Citation with Related Application(s)

This application claims the benefit of Korean Patent Application No. 10-2022-0184467 filed on December 26, 2022 and Korean Patent Application No. 10-2023-0183617 filed on December 15, 2023 in the Korean Intellectual Property Office.

The present disclosure relates to a battery module and a battery pack including the same, and more specifically, to a battery module having improved energy density, and a battery pack including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, a lithium secondary battery, and the like. Among them, the lithium secondary battery has come into the spotlight because it has advantages, for example, hardly exhibiting memory effects compared to nickel-based secondary batteries and thus being freely charged and discharged, and having very low self-discharge rate and high energy density.

A lithium secondary battery generally uses lithium-based oxide and a carbon material as a positive electrode active material and a negative electrode active material, respectively, see for example EP3978284A1 and WO2021253976A1. The lithium secondary battery includes an electrode assembly in which a positive electrode plate and a negative electrode plate respectively coated with the positive electrode active material and the negative electrode active material are arranged with a separator between them, and an exterior material or a battery case which hermetically houses the electrode assembly together with an electrolyte.

Depending on the shape of the exterior material, generally, a lithium secondary battery may be classified into a can type secondary battery where the electrode assembly is incorporated into a metal can and a pouch type battery where the electrode assembly is incorporated into a pouch of an aluminum laminate sheet.

In the case of a secondary battery used for small-sized devices, two to three battery cells are disposed, but in the case of a secondary battery used for a medium- and large-sized device such as automobiles, a battery module in which a plurality of battery cells are electrically connected is used. In such a battery module, a plurality of battery cells are connected to each other in series or parallel to form a cell assembly, thereby improving capacity and output. Further, one or more battery modules can be mounted together with various control and protection systems such as a BDU (battery disconnect unit), a BMS (battery management system), and a cooling system to form a battery pack.

Unlike the battery pack mounted on a passenger car, the battery pack mounted on a commercial vehicle can be located in an empty space located at the lower part of the article loading space rather than the seat of a user, and accordingly, a battery pack with a relatively high height is required.

When configuring a battery pack having high height with conventional battery modules, unnecessary loss of space occurs due to factors such as duplication of components placed between battery modules, assembly tolerances, and space capable of swelling. Therefore, there is a need to develop battery modules and battery packs having new structures that can suppress displacement due to swelling of the battery cells within the battery module, and simultaneously can increase energy density by minimizing the internal space loss.

### [DETAILED DESCRIPTION OF THE INVENTION]

### [Technical Problem]

It is an object of the present disclosure to provide a battery module that can suppress displacement due to swelling of the battery cells within the battery module, and simultaneously can increase energy density by minimizing the internal space loss, and a battery pack including the same.

However, the technical problems to be solved by embodiments of the present disclosure are not limited to the above-mentioned problems, and can be variously expanded within the scope of the technical idea included in the present disclosure.

### [Technical Solution]

According to one embodiment of the present disclosure, there is provided a battery module comprising: a battery cell stack in which a plurality of battery cells are stacked along a first direction; at least one vertical beam arranged on both side surfaces of the battery cell stack or arranged in at least one place between the battery cells within the battery cell stack; at least one first cover member located on one side of the battery cell stack, connected to at least one of the vertical beams, and extending along the first direction; and at least one second cover member located on the other side of the battery cell stack, connected to at least one of the vertical beams, and extending along the first direction, wherein, when viewed along a height direction perpendicular to the first direction, the first cover member and the second cover member are located in an area where they do not overlap each other.

The at least one first cover member may be located on one side of the battery cell stack along the height direction, and the at least one second cover member may be located on the other side of the battery cell stack along the height direction.

The at least one first cover member and the at least one second cover member may be located opposite to each other with the battery cell stack between them.

At least one of the first cover member or the second cover member may have a plate shape having a cavity therein.

The second cover member may be located at the lower part of the battery cell stack, and may have a plate shape having a cavity therein.

The first cover member and the second cover member may be respectively configured in plural numbers. The plurality of first cover members and the plurality of second cover members may be respectively arranged so as to be spaced apart along a second direction perpendicular to both the first direction and the height direction.

When viewed along the height direction, one of the first cover members may be located in an area between the second cover members.

When viewed along the height direction, one of the second cover members may be located in an area between the first cover members.

According to one embodiment of the present disclosure, there is provided a battery pack comprising: a plurality of the battery modules, wherein the at least two of the battery modules are stacked along a height direction, wherein the battery modules include a first battery module and a second battery module that are located adjacent to each other along the height direction, and wherein the second cover member of the first battery module and the first cover member of the second battery module are located in a space between the battery cell stack of the first battery module and the battery cell stack of the second battery module.

In the battery module, the first cover member and the second cover member may be respectively configured in plural numbers, and the plurality of first cover members and the plurality of second cover members may be respectively arranged so as to be spaced apart along a second direction perpendicular to both the first direction and the height direction.

The second cover member of the first battery module and the first cover member of the second battery module may be alternately located along a second direction perpendicular to both the first direction and the height direction.

The battery pack may further comprise a long bolt member that passes through all the vertical beams of the battery modules stacked along the height direction, and is fixed to a vehicle or pack frame.

### [Advantageous Effects]

According to embodiments of the present disclosure, the first cover member and the second cover member of the battery module can be located in an area where they do not overlap each other, thereby reducing the total height when battery modules are stacked along the height direction. That is, it is possible to reduce space and increase energy density.

In addition, the battery modules stacked in the height direction can be fixed with a long bolt member passing through the vertical beams of the battery modules, thereby increasing the structural stability of the battery pack, and effectively suppressing displacement due to swelling of the battery cells inside the battery module.

Effects obtainable from the present disclosure are not limited to the effects mentioned above, and additional other effects not mentioned herein will be clearly understood from the description of the appended claims by those skilled in the art.

### [BRIEF DESCRIPTION OF THE DRAWINGS]

FIG. 1 is a schematic perspective view of a battery module according to an embodiment of the present disclosure.
FIG. 2 is a cross-sectional view illustrating a cross section taken along the cutting line A-A' in FIG. 1.
FIG. 3 is a perspective view illustrating one of the battery cells included in the battery module of FIGS. 1 and 2.
FIG. 4 is a perspective view illustrating a state in which the first cover member is removed from the battery module of FIG. 1.
FIG. 5 is a perspective view illustrating vertical beams and the second cover member included in the battery module of FIG. 1.
FIG. 6 is a perspective view showing the vertical beams and the first cover member included in the battery module of FIG. 1.
FIG. 7 is a bottom view of the battery module of FIG. 1 viewed from below.
FIG. 8 is a plan view of the battery module of FIG. 1 viewed from above.
FIG. 9 is a perspective view illustrating a battery pack according to an embodiment of the present disclosure.
FIG. 10 is a side view of the battery pack of FIG. 9 as viewed from the side.
FIG. 11 is a cross-sectional view illustrating a state in which a battery pack according to an embodiment of the present disclosure is fixed by a long bolt member.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of portions that are not related to the description will be omitted for clarity, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

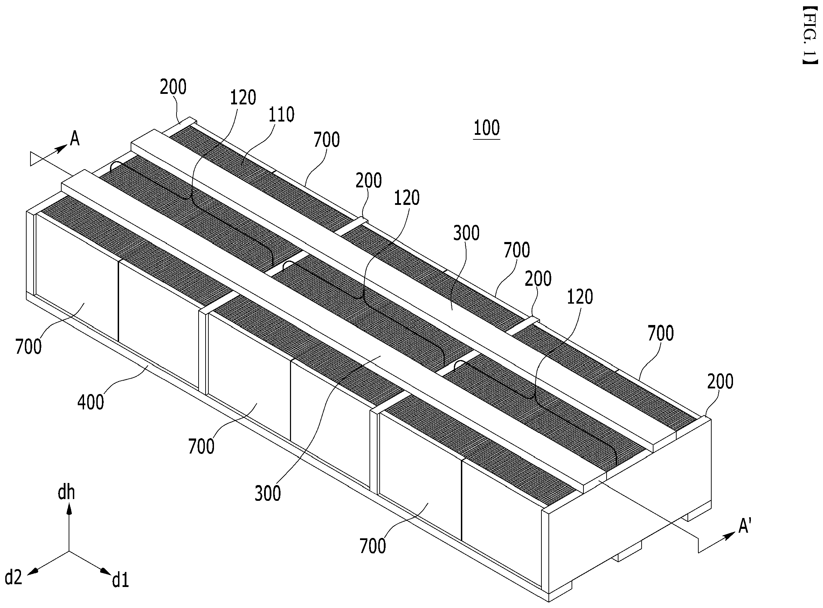

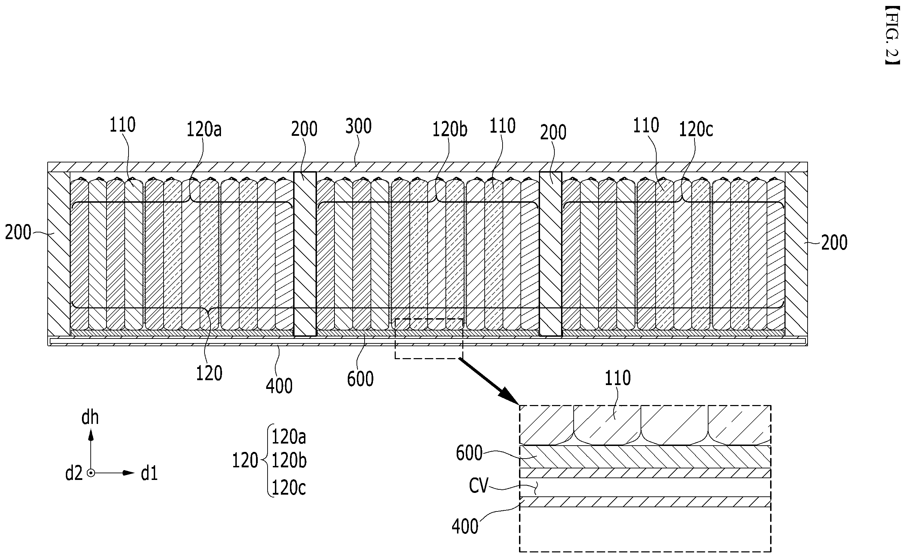

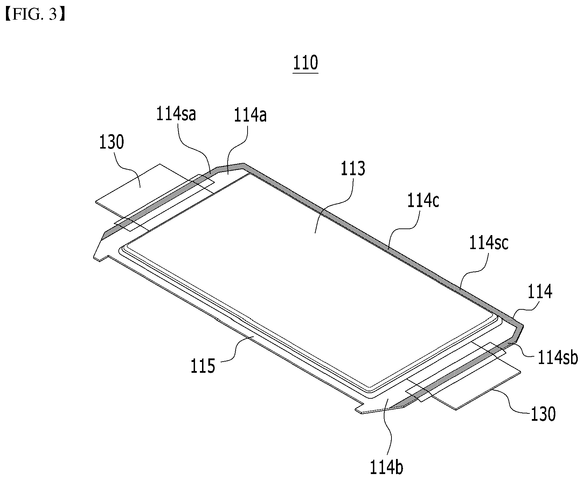

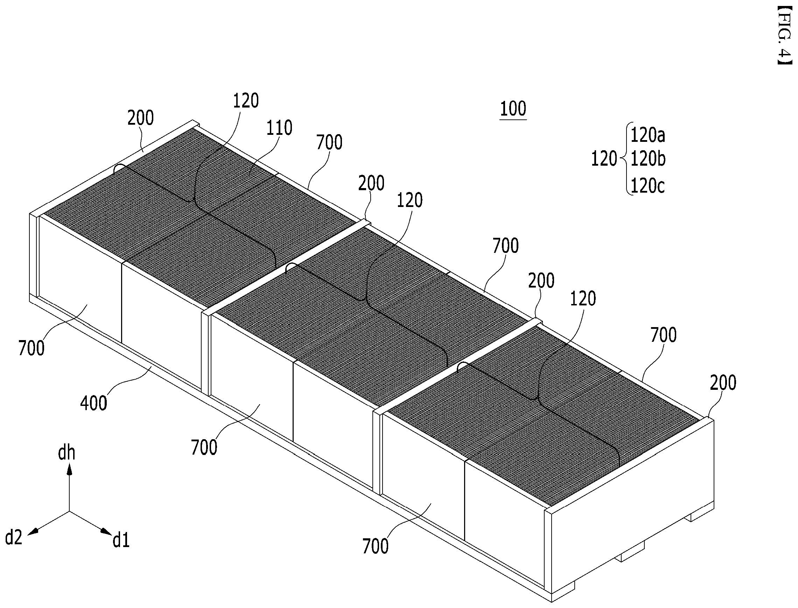

FIG. 1 is a schematic perspective view of a battery module according to an embodiment of the present disclosure. FIG. 2 is a cross-sectional view illustrating a cross section taken along the cutting line A-A' in FIG. 1. FIG. 3 is a perspective view illustrating one of the battery cells included in the battery module of FIGS. 1 and 2. FIG. 4 is a perspective view illustrating a state in which the first cover member is removed from the battery module of FIG. 1.

Referring to FIGS. 1 to 4, the battery module 100 according to an embodiment of the present disclosure includes a battery cell stack 120 in which a plurality of battery cells 110 are stacked along a first direction d1; at least one vertical beam 200 arranged on both side surfaces of the battery cell stack 120 or arranged in at least one place between the battery cells 110 within the battery cell stack 120; at least one first cover member 300 located on one side of the battery cell stack 120, connected to at least one vertical beam 200, and extending along the first direction d1; and at least one second cover member 400 located on the other side of the battery cell stack 120, connected to at least one of the vertical beams 200, and extending along the first direction d1.

The battery cell 110 according to the present embodiment may be various types of battery cells, for example, a pouch-type battery cell, a prismatic battery cell, or a cylindrical battery cell. In one example, as illustrated in FIG. 3, the battery cell 110 according to the present embodiment may be a pouch-type battery cell. Below, a pouch-type battery cell will be described, but the battery cell 110 according to this embodiment is not limited thereto, and various types of battery cells can be applied. The pouch-type battery cell can be formed by housing an electrode assembly in a pouch case made of a laminated sheet including a resin layer and a metal layer and then bonding the outer periphery of the pouch case. The battery cell 110 may have a rectangular sheet structure. For example, the battery cell 110 according to the present embodiment may have a structure in which two electrode leads 130 face each other and protrude from one end part and the other end part, respectively. One of the electrode leads 130 is a positive electrode lead, and the other is a negative electrode lead.

In particular, referring to FIG. 3, the battery cell 110 according to the present embodiment may have a structure in which two electrode leads 130 face each other and protrude from one end part 114a and the other end part 114b of the cell body 113, respectively. More specifically, the electrode lead 130 is connected to an electrode assembly (not shown), and protrudes from the electrode assembly (not shown) to the outside of the battery cell 110.

Meanwhile, the battery cell 110 can be produced by joining both end parts 114a and 114b of a cell case 114 and one side part 114c connecting the both end parts 114a and 114b in a state in which an electrode assembly (not shown) is housed in a cell case 114. In other words, the battery cell 110 according to an embodiment of the present disclosure has a total of three sealing parts 114sa, 114sb and 114sc, wherein the sealing parts 114sa, 114sb and 114sc have a structure that is sealed by a method such as thermal fusion, and the remaining other side part may be composed of a folding part 115. The cell case 114 may be composed of a laminated sheet including a resin layer and a metal layer.

In FIG. 3, only the battery cell 110 having a structure in which the electrode leads 130 protrude in both directions has been described, but in other embodiments of the present disclosure, it goes without saying that a unidirectional pouch-type battery cell in which the electrode leads protrude together in one direction can also be used.

The cell case 114 made of the laminate sheet may include an inner resin layer for sealing, a metal layer for prevent penetration of materials, and an outermost outer resin layer. Based on the electrode assembly inside the cell case 114, the inner resin layer may be located at the innermost side, the outer resin layer may be located at the outermost side, and the metal layer may be located between the inner resin layer and the outer resin layer.

In order to protect the electrode assembly from the outside, the outer resin layer can have excellent tensile strength and weather resistance relative to the thickness, and can have electrical insulation properties. Such an outer resin layer may include polyethylene terephthalate(PET) resin or nylon resin. The metal layer can prevent air, moisture, and the like from flowing into the pouch-type secondary battery. Such a metal layer can include aluminum (Al). The inner resin layers may be heat-sealed to each other by heat and/or pressure applied in a state where the electrode assembly is embedded. Such an inner resin layer may include casted polypropylene (CPP) or polypropylene (PP).

The cell case 114 is divided into two portions, wherein at least one of the two portions may be formed with a concave housing part in which the electrode assembly can be seated. Along the outer periphery of this housing part, the inner resin layers of the two portions of the cell case 114 may be joined to each other to provide sealing parts 114sa, 114sb and 114sc. The pouch case can be sealed in this manner to manufacture the battery cell 110.

Such battery cells 110 may be configured in plural numbers, and the plurality of battery cells 110 may be stacked so that they can be electrically connected to each other, thereby forming a battery cell stack 120. In particular, the battery cells 110 may be stacked along a first direction d1 while standing upright so as to face one surface each of the cell body 113, thereby forming a battery cell stack 120. Thereby, one electrode lead 130 of the battery cells 110 may protrude toward a second direction d2, which will be described later, and the other electrode lead 130 may protrude toward a direction opposite to the second direction d2.

The vertical beam 200 may be a plate-shaped member having a constant area, and may be arranged in parallel to one surface of the battery cells 110. The vertical beam 200 may be arranged in parallel to one surface of the cell body 113 of the battery cell 110. That is, one surface of the vertical beam 200 may be perpendicular to the first direction d1 in which the battery cells 110 are stacked. As will be described later, this vertical beam 200 can control displacement due to swelling of the battery cells 110. As described above, the vertical beam 200 is arranged on both side surfaces of the battery cell stack 120 or in at least one place between the battery cells 110 within the battery cell stack 120. As an example, a plurality of vertical beams 200 may be arranged outside the battery cell stack 120 so as to cover both side surfaces of the battery cell stack 120. Alternatively, a vertical beam 200 may be located between the battery cells 110 within the battery cell stack 120. In FIGS. 1 to 4, a total of four vertical beams 200 are illustrated, including two vertical beams 200 located on both side surfaces of the battery cell stack 120 and two vertical beams 200 located between the battery cells 110. For structural stability, the vertical beams 200 for covering both side surfaces of the battery cell stack 120 are preferably provided outside the battery cell stack 120. Meanwhile, the number of the vertical beams 200 located between the battery cells 110 within the battery cell stack 120 is not particularly limited, and can be determined in consideration of the number, size, and the like of the battery cells 110.

Due to the vertical beam 200 arranged between the battery cells 110, the battery cell stack 120 may be divided into a plurality of sub-battery cell stacks 120a, 120b and 120c. As an example, the battery cell stack 120 may include first to third sub-battery cell stacks 120a, 120b and 120c partitioned by two vertical beams 200. One vertical beam 200 may be located between the first sub-battery cell stack 120a and the second sub-battery cell stack 120b, and another vertical beam 200 may be located between the second sub-battery cell stack 120b and the third sub-battery cell stack 120c.

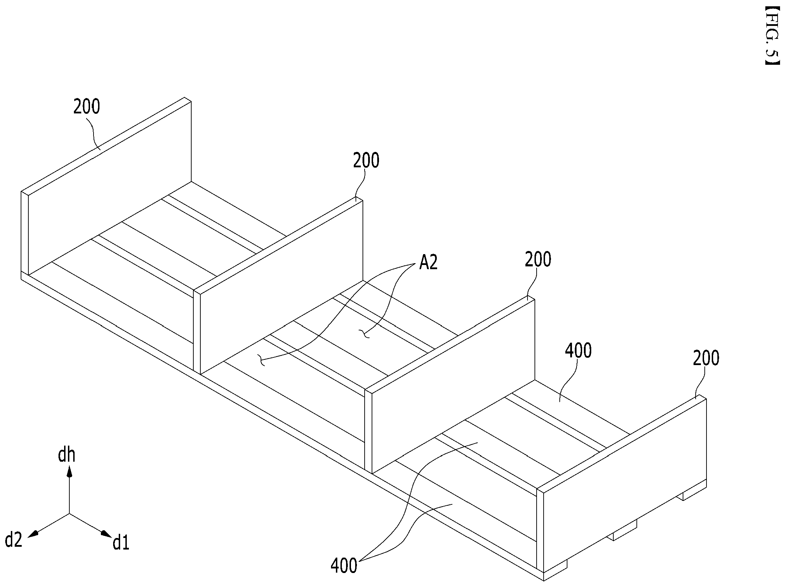

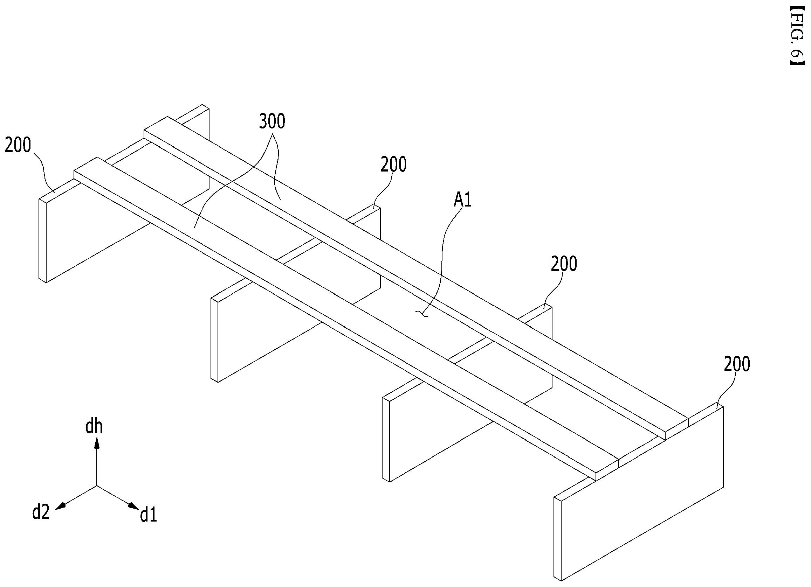

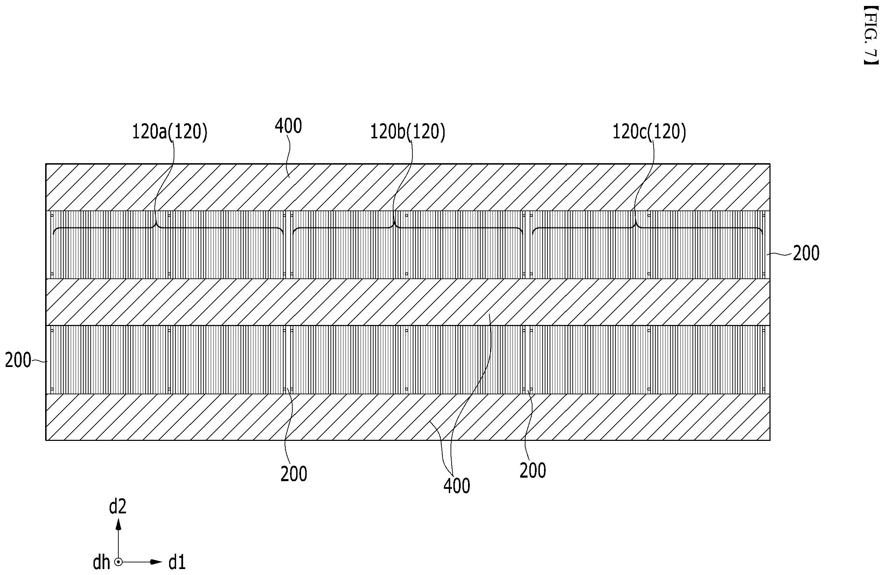

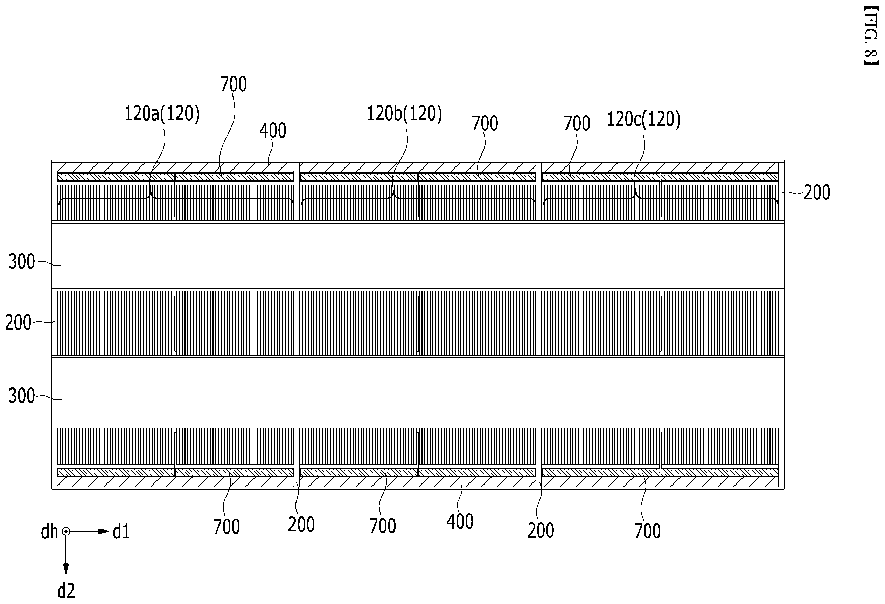

FIG. 5 is a perspective view illustrating vertical beams and the second cover member included in the battery module of FIG. 1. FIG. 6 is a perspective view showing the vertical beams and the first cover member included in the battery module of FIG. 1. FIG. 7 is a bottom view of the battery module of FIG. 1 viewed from below. FIG. 8 is a plan view of the battery module of FIG. 1 viewed from above.

Referring to FIGS. 1, 2, and 5 to 8 together, in the battery module 100 according to the present embodiment, when viewed along the height direction dh perpendicular to the first direction d1, the first cover member 300 and the second cover member 400 are located in an area where they do not overlap each other.

The first cover member 300 and the second cover member 400 according to the present embodiment are respectively connected to the vertical beam 200, and extended along the first direction d1, which is the direction in which the battery cells 110 are stacked. Specifically, at least one first cover member 300 may be located on one side of the battery cell stack 120 along the height direction dh, and at least one second cover member 400 may be located on the other side of the battery cell stack 120 along the height direction dh. In particular, at least one first cover member 300 and at least one second cover member 400 may be located opposite to each other with the battery cell stack 120 between them. As an example, as shown in FIGS. 1, 2, 5 and 6, the first cover member 300 may be located on the upper part of the battery cell stack 120, and the second cover member 400 may be located at the lower part of the battery cell stack 120. In another embodiment of the present disclosure, the first cover member is located at the lower part of the battery cell stack 120, and the second cover member may also be located at the upper part of the battery cell stack 120.

When viewed along the height direction dh, the first cover member 300 and the second cover member 400 are located in an area where they do not overlap each other. Therefore, when a plurality of battery modules 100 are stacked along the height direction dh, the second cover member 400 of the battery module 100 located above and the first cover member 300 of the battery module 100 located below may be located without overlapping each other. In another embodiment in which the first cover member is located at the lower part of the battery cell stack 120 and the second cover member is located at the upper part of the battery cell stack 120, the first cover member of the battery module 100 located above and the second cover member of the battery module 100 located below may be located without overlapping each other. In the present embodiment, the first cover member 300 and the second cover member 400 are set so as not to overlap each other, so that the total height when the battery modules 100 are stacked along the height direction dh can be reduced. This will be described below.

Meanwhile, in the battery module 100, the first cover member 300 and the second cover member 400 may be respectively configured in plural numbers. The plurality of first cover members 300 and the plurality of second cover members 400 will be respectively arranged so as to be spaced apart along a second direction d2 perpendicular to both the first direction d1 and the height direction dh. In this specification, the first direction d1, the second direction d2, and the height direction dh are directions indicated for convenience of explanation, and are all directions perpendicular to each other. As an example, an embodiment in which the battery module 100 has two first cover members 300 and three second cover members 400, and the two first cover members 300 and the three second cover members 400 are located apart from each other along the second direction d2 is illustrated in FIGS. 1 and 5 to 8.

Further, when viewed along the height direction dh, one of the first cover members 300 may be located in an area A2 (see FIG. 5 ) between the second cover members 400. Specifically, an area A2 having an empty space between the second cover members 400 may be formed. When viewed along the height direction dh, one of the first cover members 300 may be located in an area A2 between the second cover members 400. Further, when viewed along the height direction dh, one of the second cover members 400 may be located in an area A1 (see FIG. 6) between the first cover members 300. Specifically, an area A1 having an empty space between the first cover members 300 may be formed. When viewed along the height direction dh, one of the second cover members 400 may be located in an area A1 between the first cover members 300. In one embodiment of the present disclosure, when viewed along the height direction dh, the first cover member 300 and the second cover member 400 may be alternately located along the second direction d2.

Meanwhile, referring again to FIG. 2, at least one of the first cover member 300 or the second cover member 400 may be in the form of a plate having a cavity CV therein. At least one of the first cover member 300 or the second cover member 400 can be realized in a plate shape having a cavity CV, rather than a simple plate shape, thereby compensating the rigidity as so to support the battery cells 110. In particular, as described above, the second cover member 400 may be located at the lower part of the battery cell stack 120. This second cover member 400 may have a plate shape having a cavity CV inside. As the second cover member 400 located at the lower part of the battery cell stack 120 is realized in a plate shape having a cavity CV, the rigidity of the second cover member 400 is increased, the battery cells can be sufficiently supported, and the stability of the overall structure of the battery module 100 is increased.

Meanwhile, a heat sink 600 for cooling the battery cells 110 may be located between the battery cell stack 120 and the second cover member 400. The inside of the heat sink 600 may be formed with a cooling flow passage through which coolant flows. Heat generated in the battery cells 110 is transferred from the edge part of each battery cell 110 to the heat sink 600 and discharged to the outside. That is, the battery module 100 according to the present embodiment may have a water-cooled structure and an edge cooling structure. The coolant flowing inside the heat sink 600 is not particularly limited, and as an example, cooling water may be applied. In addition, although not specifically illustrated, a thermal resin layer formed by applying thermal resin may be located between the battery cell stack 120 and the heat sink 600.

Meanwhile, the battery module 100 according to the present embodiment may further include an end plate 700 that covers both surfaces along the second direction d2 and the opposite direction thereof among the battery cell stack 120. This end plate 700 may be a plate-shaped member having a certain area, and may be connected to the vertical beam 200. One surface of the end plate 700 may be perpendicular to one surface of the vertical beam 200. That is, in the present embodiment, one surface of the vertical beam 200 may be parallel to each of the second direction d2 and the height direction dh, and one surface of the end plate 700 may be parallel to the first direction d1 and the height direction dh, respectively. The battery cells 110 can be protected from the outside by being covered by the vertical beam 200 and the end plate 700.

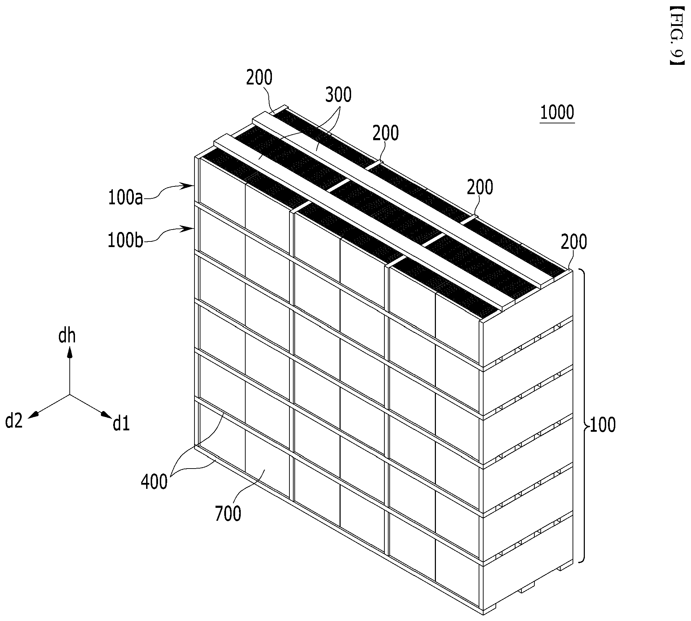

A battery pack according to an embodiment of the present disclosure will be described below with reference to FIGS. 9 to 11, and the like.

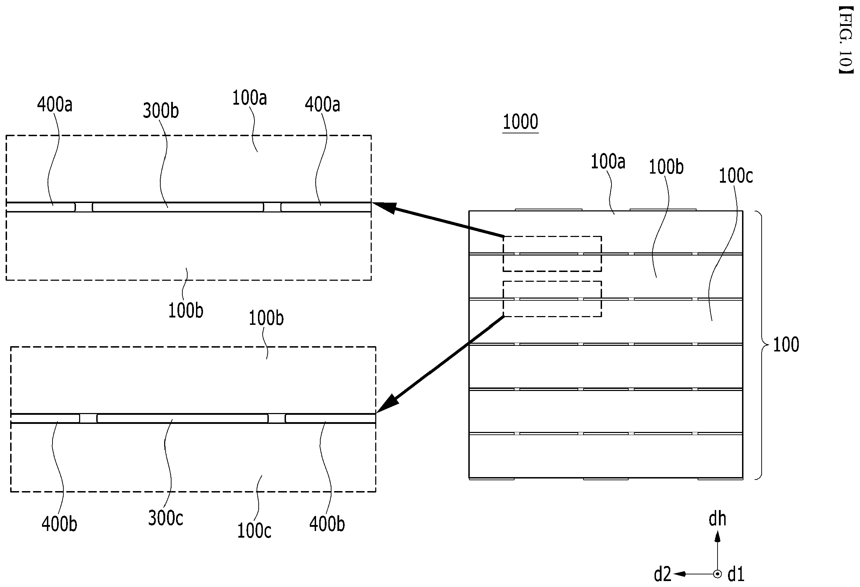

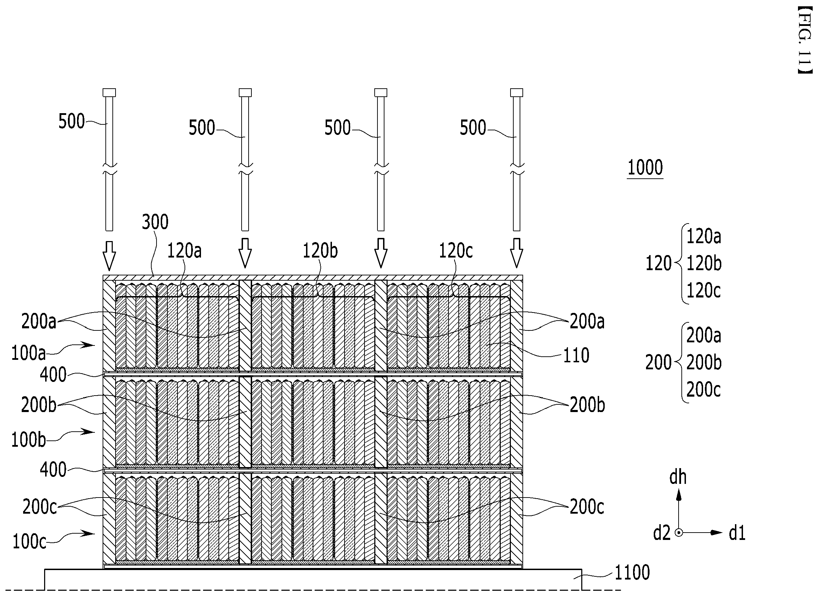

FIG. 9 is a perspective view illustrating a battery pack according to an embodiment of the present disclosure. FIG. 10 is a side view of the battery pack of FIG. 9 as viewed from the side. FIG. 11 is a cross-sectional view illustrating a state in which a battery pack according to an embodiment of the present disclosure is fixed by a long bolt member.

Referring to FIGS. 9 to 11 together with FIGS. 1 and 4 to 8, the battery pack 1000 according to an embodiment of the present disclosure includes a plurality of battery modules 100, and at least two battery modules 100 are stacked along the height direction dh. The battery modules 100 include a first battery module 100a and a second battery module 100b that are located adjacent to each other along the height direction dh. Further, a third battery module 100c may be located under the second battery module 100b.

The second cover member 400a of the first battery module 100a and the first cover member 300b of the second battery module 100b are located in a space between the battery cell stack 120 of the first battery module 100a and the battery cell stack 120 of the second battery module 100b. As described above, when viewed along the height direction dh, since the first cover member 300 and the second cover member 400 are located in an area where they do not overlap each other, the second cover member 400a of the first battery module 100a and the first cover member 300b of the second battery module 100b are located without overlapping each other, so that the height in the structure in which the first battery module 100a and the second battery module 100b are stacked can be reduced.

Further, in the first battery module 100a, the second cover members 400a may be configured in plural number, and the second cover members 400a may be arranged so as to be spaced apart along the second direction d2. In the second battery module 100b, the first cover members 300b may be configured in plural numbers, and the first cover members 300b may be arranged so as to be spaced apart along the second direction d2.

When the first battery module 100a and the second battery module 100b are stacked along the height direction dh, the second cover members 400a of the first battery module 100a and the first cover members 300b of the second battery module 100b may be alternately arranged along the second direction d2.

The relationship with the first battery module 100a located above the second battery module 100b has been described above, but a similar structure can be applied even to the relationship with the third battery module 100c located under the second battery module 100b. Specifically, the second cover member 400b of the second battery module 100b and the first cover member 300c of the third battery module 100c may be located without overlapping each other in the space between the battery cell stack 120 of the second battery module 100b and the battery cell stack 120 of the third battery module 100c. The second cover members 400b of the second battery module 100b and the first cover members 300c of the third battery module 100c may be alternately located along the second direction d2. The first cover members 300, 300b and 300c and the second cover members 400, 400a and 400b are designed so as not to overlap each other in this manner, whereby when a plurality of battery modules 100a, 100b and 100c are stacked along the height direction dh, the height of the entire battery pack 1000 can be reduced. The space utilization of the battery pack 1000 increases by the reduced height, which may lead to an increase in capacity of the entire battery pack 1000.

Meanwhile, the battery pack 1000 according to the present embodiment may further include a long bolt member 500 that passes through all the vertical beams 200a, 200b and 200c of the battery modules 100a, 100b and 100c stacked along the height direction dh, and is fixed to the vehicle or pack frame. In FIG. 11, a fastening object 1100 to which the long bolt member 500 passing through the vertical beams 200a, 200b and 200c is fastened may be a vehicle or a pack frame. The long bolt member 500 may be bolt-coupled to a vehicle or pack frame. For example, the long bolt member 500 may pass through a through hole formed in the fastening object 1100 and then be coupled to a nut member (not shown). As another example, the long bolt member 500 may be directly coupled to a hole having a screw thread provided in the fastening object 1100.

The battery cells may cause a phenomenon in which the internal electrolyte decomposes to generate gas and the battery cells swells in a process in which charge/discharge is repeated, that is, a swelling phenomenon. If the swelling of the battery cell cannot be controlled, it may cause a structural deformation of the battery module 100 containing the plurality of battery cells 110, and may adversely affect the durability and performance of the battery module 100 and a battery pack including the same.

In particular, recently, pure Si cells and high SiO content cells are used as battery cells for manufacturing high-capacity battery modules and battery packs, and in the case of the above cells, the degree of swelling is larger. That is, in order to manufacture high-capacity battery modules and battery packs, it is essential to effectively control the swelling of the battery cells 110 inside the battery module or battery pack. Since the pouch-type battery cells 110 usually have a large degree of swelling in the thickness direction, that is, in the first direction d1, which is the direction in which the battery cells 119 are stacked, the structure directly related to swelling control is a vertical beam 200 that is arranged on both side surfaces of the battery cell stack 120 or between the battery cells 110. The battery module 100 according to the present embodiment has a simplified housing structure that partially covers the battery cell stack 120 through the vertical beam 200, the first cover member 300, and the second cover member 400, rather than a module housing that surrounds the battery cell stack. Thereby, the overall weight and volume of the battery module 100 can be reduced, but it may be difficult to provide sufficient lateral rigidity and durability to control swelling of the battery cells 110. Therefore, in the battery pack 1000 according to the present embodiment, the vertical beam 200 is fixed to the vehicle or the pack frame using the long bolt member 500 when stacking the battery modules 100 having a simplified housing structure. Thereby, the vertical beam 200, whose rigidity is strengthened as much as the long bolt member 500 is inserted, is designed to control the 15 displacement due to swelling of the battery cells 110. That is, when the mounting of the stacked battery modules 100 is fixed by the long bolt member 500 passing through the vertical beams 200, the vertical beam 200 simultaneously controls the swelling of the battery cells 110 to supplement the rigidity and durability of the battery module 100 and the battery pack 1000 including the same. In other words, the long bolt member 500 according to the present embodiment not only functions to fix the stacked battery modules 100, but also may perform the function similar to a so-called reinforcing rod, which strengthens the rigidity of the vertical beam 200 so as to control swelling of the battery cell 110.

The terms representing directions such as the front side, the rear side, the left side, the right side, the upper side, and the lower side have been used in the present embodiment, but it is obvious to those skilled in the art that the terms used are provided simply for convenience of description, and may become different according to the position of an object, the position of an observer, or the like.

The one or more battery modules according to embodiments of the present disclosure described above can be mounted together with various control and protection systems such as a BMS (battery management system), a BDU(battery disconnect unit), and a cooling system to form a battery pack.

The battery pack can be applied to various devices. Specifically, it can be applied to vehicle means such as an electric bike, an electric vehicle, and a hybrid electric vehicle, or an ESS (Energy Storage System), but is not limited thereto, and can be applied to various devices capable of using a secondary battery. In particular, the battery pack according to the present embodiment can be applied to commercial vehicles.

Although the invention has been described in detail with reference to preferred embodiments thereof, the scope of the present disclosure is not limited thereto.

### [Description of Reference Numerals]

100: battery module
100a: first battery module
100b: second battery module
100c: third battery module
110: battery cell
120: battery cell stack
200: vertical beam
300: first cover member
400: second cover member
500: long bolt member

## Claims

1. A battery module (100) comprising:
a battery cell stack (120) in which a plurality of battery cells (110) are stacked along a first direction (d1);
at least one vertical beam (200) arranged on both side surfaces of the battery cell stack (120) or arranged in at least one place between the battery cells (110) within the battery cell stack;
at least one first cover member (300) located on one side of the battery cell stack (120), connected to at least one of the vertical beams (200), and extending along the first direction (d1) ; and
at least one second cover member (400) located on the other side of the battery cell stack (120), connected to at least one of the vertical beams (200), and extending along the first direction (d1),
**characterised in that**,
when viewed along a height direction (dh) perpendicular to the first direction (d1), the first cover member (300) and the second cover member (400) are located in an area where they do not overlap each other.

2. The battery module (100) as claimed in claim 1, wherein:
the at least one first cover member (300) is located on one side of the battery cell stack (120) along the height direction (dh), and
the at least one second cover member (400) is located on the other side of the battery cell stack (120) along the height direction (dh).

3. The battery module (100) as claimed in claim 1, wherein:
the at least one first cover member (300) and the at least one second cover member (400) are located opposite to each other with the battery cell stack (120) between them.

4. The battery module (100) as claimed in claim 1, wherein:
at least one of the first cover member (300) or the second cover member (400) has a plate shape having a cavity therein.

5. The battery module (100) as claimed in claim 1, wherein:
the second cover member (400) is located at the lower part of the battery cell stack (120), and has a plate shape having a cavity therein.

6. The battery module (100) as claimed in claim 1, wherein:
the first cover member (300) and the second cover member (400) are respectively configured in plural numbers, and
the plurality of first cover members (300) and the plurality of second cover members (400) are respectively arranged so as to be spaced apart along a second direction (d2) perpendicular to both the first direction (d1) and the height direction (dh).

7. The battery module (100) as claimed in claim 6, wherein:
when viewed along the height direction (dh), one of the first cover members (300) is located in an area between the second cover members (400).

8. The battery module (100) as claimed in claim 6, wherein:
when viewed along the height direction (dh), one of the second cover members (400) is located in an area (A1) between the first cover members (300).

9. A battery pack (1000) comprising:
a plurality of the battery modules (100) as claimed in claim 1,
wherein the at least two of the battery modules (100) are stacked along a height direction (dh),
wherein the battery modules include a first battery module (100a) and a second battery module (100b) that are located adjacent to each other along the height direction (dh), and
wherein the second cover member (400a) of the first battery module (100a) and the first cover member (300a) of the second battery module (100b) are located in a space between the battery cell stack (120) of the first battery module (100a) and the battery cell stack (120) of the second battery module (100b).

10. The battery pack (1000) as claimed in claim 9, wherein:
in the battery module (100), the first cover member (300) and the second cover member (400) are respectively configured in plural numbers, and
the plurality of first cover members (300) and the plurality of second cover members (400) are respectively arranged so as to be spaced apart along a second direction (d2) perpendicular to both the first direction (d1) and the height direction (dh).

11. The battery pack (1000) as claimed in claim 9, wherein:
the second cover member (400a) of the first battery module (100a) and the first cover member (300b) of the second battery module (100b) are alternately located along a second direction (d2) perpendicular to both the first direction (d1) and the height direction (dh).

12. The battery pack (1000) as claimed in claim 9, further comprising:
a long bolt member (500) that passes through all the vertical beams (200) of the battery modules (100) stacked along the height direction (dh), and is fixed to a vehicle or pack frame (1100.

## Patentansprüche

1. Batteriemodul (100), umfassend:
einen Batteriezellenstapel (120), in dem eine Vielzahl von Batteriezellen (110) entlang einer ersten Richtung (d1) gestapelt sind;
mindestens einen Vertikalträger (200), der an beiden Seitenflächen des Batteriezellenstapels (120) angeordnet ist oder an mindestens einer Stelle zwischen den Batteriezellen (110) innerhalb des Batteriezellenstapels angeordnet ist;
mindestens ein erstes Abdeckelement (300), das auf einer Seite des Batteriezellenstapels (120) angeordnet ist, mit mindestens einem der Vertikalträger (200) verbunden ist und sich entlang der ersten Richtung (d1) erstreckt; und
mindestens ein zweites Abdeckelement (400), das auf der anderen Seite des Batteriezellenstapels (120) angeordnet ist, mit mindestens einem der Vertikalträger (200) verbunden ist und sich entlang der ersten Richtung (d1) erstreckt,
**dadurch gekennzeichnet, dass** bei Betrachtung entlang einer Höhenrichtung (dh) senkrecht zur ersten Richtung (d1) das erste Abdeckelement (300) und das zweite Abdeckelement (400) in einem Bereich angeordnet sind, in dem sie sich nicht gegenseitig überlappen.

2. Batteriemodul (100) nach Anspruch 1, wobei:
das mindestens eine erste Abdeckelement (300) auf einer Seite des Batteriezellenstapels (120) entlang der Höhenrichtung (dh) angeordnet ist, und
das mindestens eine zweite Abdeckelement (400) auf der anderen Seite des Batteriezellenstapels (120) entlang der Höhenrichtung (dh) angeordnet ist.

3. Batteriemodul (100) nach Anspruch 1, wobei:
das mindestens eine erste Abdeckelement (300) und das mindestens eine zweite Abdeckelement (400) einander gegenüberliegend angeordnet sind, mit dem Batteriezellenstapel (120) zwischen ihnen.

4. Batteriemodul (100) nach Anspruch 1, wobei:
mindestens eines von dem ersten Abdeckelement (300) oder dem zweiten Abdeckelement (400) eine Plattenform mit einem Hohlraum darin aufweist.

5. Batteriemodul (100) nach Anspruch 1, wobei:
das zweite Abdeckelement (400) am unteren Teil des Batteriezellenstapels (120) angeordnet ist und eine Plattenform mit einem Hohlraum darin aufweist.

6. Batteriemodul (100) nach Anspruch 1, wobei:
das erste Abdeckelement (300) und das zweite Abdeckelement (400) jeweils in Mehrzahl konfiguriert sind, und
die Vielzahl von ersten Abdeckelementen (300) und die Vielzahl von zweiten Abdeckelementen (400) jeweils so angeordnet sind, dass sie entlang einer zweiten Richtung (d2) beabstandet sind, die sowohl zur ersten Richtung (d1) als auch zur Höhenrichtung (dh) senkrecht ist.

7. Batteriemodul (100) nach Anspruch 6, wobei:
bei Betrachtung entlang der Höhenrichtung (dh) eines der ersten Abdeckelemente (300) in einem Bereich zwischen den zweiten Abdeckelementen (400) angeordnet ist.

8. Batteriemodul (100) nach Anspruch 6, wobei:
bei Betrachtung entlang der Höhenrichtung (dh) eines der zweiten Abdeckelemente (400) in einem Bereich (A1) zwischen den ersten Abdeckelementen (300) angeordnet ist.

9. Batteriepack (1000), umfassend:
eine Vielzahl der Batteriemodule (100) nach Anspruch 1,
wobei die mindestens zwei der Batteriemodule (100) entlang einer Höhenrichtung (dh) gestapelt sind,
wobei die Batteriemodule ein erstes Batteriemodul (100a) und ein zweites Batteriemodul (100b) enthalten, die entlang der Höhenrichtung (dh) benachbart zueinander angeordnet sind, und
wobei das zweite Abdeckelement (400a) des ersten Batteriemoduls (100a) und das erste Abdeckelement (300a) des zweiten Batteriemoduls (100b) in einem Raum zwischen dem Batteriezellenstapel (120) des ersten Batteriemoduls (100a) und dem Batteriezellenstapel (120) des zweiten Batteriemoduls (100b) angeordnet sind.

10. Batteriepack (1000) nach Anspruch 9, wobei:
in dem Batteriemodul (100) das erste Abdeckelement (300) und das zweite Abdeckelement (400) jeweils in Mehrzahl konfiguriert sind, und
die Vielzahl von ersten Abdeckelementen (300) und die Vielzahl von zweiten Abdeckelementen (400) jeweils so angeordnet sind, dass sie entlang einer zweiten Richtung (d2) beabstandet sind, die sowohl zur ersten Richtung (d1) als auch zur Höhenrichtung (dh) senkrecht ist.

11. Batteriepack (1000) nach Anspruch 9, wobei:
das zweite Abdeckelement (400a) des ersten Batteriemoduls (100a) und das erste Abdeckelement (300b) des zweiten Batteriemoduls (100b) abwechselnd entlang einer zweiten Richtung (d2) angeordnet sind, die sowohl zur ersten Richtung (d1) als auch zur Höhenrichtung (dh) senkrecht ist.

12. Batteriepack (1000) nach Anspruch 9, ferner umfassend:
ein langes Bolzenelement (500), das durch alle Vertikalträger (200) der entlang der Höhenrichtung (dh) gestapelten Batteriemodule (100) hindurchgeht und an einem Fahrzeug- oder Packrahmen (1100) befestigt ist.

## Revendications

1. Un module de batterie (100) comprenant :
un empilement de cellules de batterie (120) dans lequel une pluralité de cellules de batterie (110) sont empilées le long d'une première direction (d1) ;
au moins une poutre verticale (200) agencée sur les deux surfaces latérales de l'empilement de cellules de batterie (120) ou agencée en au moins un emplacement entre les cellules de batterie (110) à l'intérieur de l'empilement de cellules de batterie ;
au moins un premier élément de capot (300) situé sur un côté de l'empilement de cellules de batterie (120), relié à au moins l'une des poutres verticales (200), et s'étendant le long de la première direction (d1) ; et
au moins un second élément de capot (400) situé sur l'autre côté de l'empilement de cellules de batterie (120), relié à au moins l'une des poutres verticales (200), et s'étendant le long de la première direction (d1),
**caractérisé en ce que**, vu le long d'une direction de la hauteur (dh) perpendiculaire à la première direction (d1), le premier élément de capot (300) et le second élément de capot (400) sont situés dans une zone où ils ne se chevauchent pas.

2. Le module de batterie (100) selon la revendication 1, dans lequel :
l'au moins un premier élément de capot (300) est situé sur un côté de l'empilement de cellules de batterie (120) le long de la direction de la hauteur (dh), et
l'au moins un second élément de capot (400) est situé sur l'autre côté de l'empilement de cellules de batterie (120) le long de la direction de la hauteur (dh).

3. Le module de batterie (100) selon la revendication 1, dans lequel :
l'au moins un premier élément de capot (300) et l'au moins un second élément de capot (400) sont situés à l'opposé l'un de l'autre avec l'empilement de cellules de batterie (120) entre eux.

4. Le module de batterie (100) selon la revendication 1, dans lequel :
au moins l'un du premier élément de capot (300) ou du second élément de capot (400) a une forme de plaque présentant une cavité.

5. Le module de batterie (100) selon la revendication 1, dans lequel :
le second élément de capot (400) est situé dans la partie inférieure de l'empilement de cellules de batterie (120), et a une forme de plaque présentant une cavité.

6. Le module de batterie (100) selon la revendication 1, dans lequel :
le premier élément de capot (300) et le second élément de capot (400) sont respectivement configurés en plusieurs nombres, et
la pluralité de premiers éléments de capot (300) et la pluralité de seconds éléments de capot (400) sont respectivement agencés de manière à être espacés le long d'une seconde direction (d2) perpendiculaire à la fois à la première direction (d1) et à la direction de la hauteur (dh).

7. Le module de batterie (100) selon la revendication 6, dans lequel :
vu le long de la direction de la hauteur (dh), l'un des premiers éléments de capot (300) est situé dans une zone entre les seconds éléments de capot (400).

8. Le module de batterie (100) selon la revendication 6, dans lequel :
vu le long de la direction de la hauteur (dh), l'un des seconds éléments de capot (400) est situé dans une zone (A1) entre les premiers éléments de capot (300).

9. Un bloc-batterie (1000) comprenant :
une pluralité des modules de batterie (100) selon la revendication 1,
dans lequel les au moins deux des modules de batterie (100) sont empilés le long d'une direction de la hauteur (dh),
dans lequel les modules de batterie incluent un premier module de batterie (100a) et un second module de batterie (100b) qui sont situés adjacents l'un à l'autre le long de la direction de la hauteur (dh), et
dans lequel le second élément de capot (400a) du premier module de batterie (100a) et le premier élément de capot (300a) du second module de batterie (100b) sont situés dans un espace entre l'empilement de cellules de batterie (120) du premier module de batterie (100a) et l'empilement de cellules de batterie (120) du second module de batterie (100b).

10. Le bloc-batterie (1000) selon la revendication 9, dans lequel :
dans le module de batterie (100), le premier élément de capot (300) et le second élément de capot (400) sont respectivement configurés en plusieurs nombres, et
la pluralité de premiers éléments de capot (300) et la pluralité de seconds éléments de capot (400) sont respectivement agencés de manière à être espacés le long d'une seconde direction (d2) perpendiculaire à la fois à la première direction (d1) et à la direction de la hauteur (dh).

11. Le bloc-batterie (1000) selon la revendication 9, dans lequel :
le second élément de capot (400a) du premier module de batterie (100a) et le premier élément de capot (300b) du second module de batterie (100b) sont situés en alternance le long d'une seconde direction (d2) perpendiculaire à la fois à la première direction (d1) et à la direction de la hauteur (dh).

12. Le bloc-batterie (1000) selon la revendication 9, comprenant en outre :
un élément de boulon long (500) qui traverse toutes les poutres verticales (200) des modules de batterie (100) empilés le long de la direction de la hauteur (dh), et est fixé à un véhicule ou à un bâti de bloc (1100).
